# EUROPÄISCHE PATENTSCHRIFT

(11) **EP 1 987 348 B1**
(45) Veröffentlichungstag und Bekanntmachung des Hinweises auf die Patenterteilung: **18.12.2013**
(21) Anmeldenummer: 07711201.9
(22) Anmeldetag: 22.02.2007
(51) Int. Cl.: G01N 21/88, G01N 21/952

(54) **Verfahren zum Erkennen von Fehlern auf der Oberfläche eines zylindrischen Objekts**
Method of detecting defects on the surface of a cylindrical object
Procédé de détection de défauts sur la surface d'un objet cylindrique

(30) Priorität: 25.02.2006 DE 102006008840
(43) Veröffentlichungstag der Anmeldung: 05.11.2008
(73) Patentinhaber: Fraunhofer-Gesellschaft zur Förderung der angewandten Forschung e.V., 80686 München (DE)
(72) Erfinder: CAULIER, Yannick, 90766 Fürth (DE); SPINNLER, Klaus, 91056 Erlangen (DE); COURONNE, Robert, 91058 Erlangen (DE)
(74) Vertreter: Schenk, Markus
(86) Internationale Anmeldenummer: PCT/DE2007/000340
(87) Internationale Veröffentlichungsnummer: WO 2007/095928

(56) Entgegenhaltungen:
- WO-A-03/014665
- DE-A1- 10 139 589
- DE-A1- 19 821 059
- DE-A1- 19 837 797
- DE-B- 1 156 647
- JP-A- 7 244 716
- JP-A- 8 061 928
- US-A- 5 077 640
- US-A- 6 061 126
- US-B1- 6 304 323

## Beschreibung

Die Erfindung bezieht sich auf ein Beleuchtungsverfahren für zylindrische Objekte.

Die industrielle Bildverarbeitung beschäftigt sich unter anderem mit der automatischen Untersuchung von Metallteilen, die beliebige Oberflächeneigenschaften und Formen aufweisen können. Fehler, die dabei detektiert werden, sind in zwei prinzipielle Fehlertypen unterteilbar: Verunreinigungen sowie Verformungen der Oberfläche. Typische Beispiele für Fehler sind Mulden, Kratzer, Dellen, Flecken, Verschmutzungen und Abschleifungen.

Zur automatischen Untersuchung werden die metallischen Teile mit einer angepassten Beleuchtung von einer oder mehreren Kameras aufgenommen. Hierbei kann die gesamte Oberfläche des Metallteils erfasst werden. Anschließend werden mathematische Methoden eingesetzt, um die Fehler in den Oberflächenbildern automatisch zu detektieren. Dabei sollen sich in einem Oberflächenbild fehlerbehaftete Oberflächenbereiche bestmöglich von fehlerfreien Bereichen unterscheiden lassen. Unter diesem Aspekt stellen glänzende Oberflächen eine größere Herausforderung bei der Auswahl und Anordnung geeigneter Beleuchtungskomponenten dar.

Es ist bekannt, zerstörungsfreie Prüfverfahren zur Kontrolle zylindrischer metallischer Bauteile einzusetzen, bei denen elektromagnetische Felder oder Ultraschallwellen benutzt werden. Hiermit können innere und äußere Risse in den Zylindern detektiert werden. Beispielsweise offenbart die US 5,408,104 die Untersuchung zylindrischer Metallteile unter Einsatz einer ringförmigen fluoreszierenden Lichtquelle, Die US 6,061, 126 A beschreibt ferner ein Verfahren zur Identifikation von Fehlern auf der Oberfläche eines zylindrischen Objkekts mit streifenförmigem Licht,

Es ist eine Aufgabe einer Ausführungsform der Erfindung, ein Oberflächenuntersuchungsverfahren und ein zugehöriges Computerprogrammprodukt bereitzustellen, mit der sich Oberflächenfehler zylindrischer Objekte detektieren lassen.

Die Lösung dieser Aufgabe erfolgt mit den Merkmalen der unabhängigen Ansprüche. Vorteilhafte Weiterbildungen werden durch die Merkmale der abhängigen Ansprüche wiedergegeben.

Die Erfindung bezieht sich auf ein Verfahren zum Erkennen von Fehlern auf der Oberfläche eines zylindrischen Objekts. Bei diesem Verfahren wird das Prüfobjekt mit Strahlung beaufschlagt, die auf einem Projektionsschirm oder gleichwertig hierzu auf einem Kamerasensor ein Muster aus einander benachbarten hellen und dunklen Streifen zu erzeugen vermag. Die Strahlung kann hierbei eine solche sein, die mit der nachfolgend beschriebenen Beleuchtungsvorrichtung erzeugt wird. Die von der Objektoberfläche reflektierte Strahlung wird ortsaufgelöst detektiert und die Messwerte werden als Bild erfasst. Beispielsweise kann bei der Detektion jedem Ortsbereich ein Pixel zugeordnet sein, sodass die Gesamtheit aller Pixel das Bild repräsentiert. Für jeden Bildpunkt des Bildes oder nur eines Teils dieser Bildpunkte wird eine Mehrzahl von Merkmalen berechnet. Ein Merkmal kann eine mit dem Bildpunkt verknüpfte geometrische Information oder ein mit dem Bildpunkt verknüpfter physikalischer Parameter sein. Anschließend werden Bildpunkte, bei denen der Wert eines Merkmals oberhalb und/oder unterhalb eines vorgegebenen Schwellwerts liegt, identifiziert. Im Regelfall wird dies für alle berechneten Merkmale durchgeführt. Danach werden Bildregionen identifiziert, in denen die identifizierten Bildpunkte eine vorgegebene Dichte überschreiten. Jede Bildregion stellt dann einen Bereich des Bildes, und entsprechend hierzu einen Teils der Prüfobjektoberfläche dar, wo möglicherweise ein Fehler vorliegt. In einem letzten Schritt wird ein Fehler bzw. eine Fehlerregion dadurch identifiziert, dass dort die zu mindestens zwei verschiedenen Merkmalen gehörenden Bildregionen hinreichend dicht benachbart sind.

Das obige Verfahren ermöglicht eine Identifikation von Oberflächenfehlern mit hoher Robustheit gegenüber Artefakten und erlaubt es Verunreinigungen auf der Oberfläche (z. B. Farbspritzer auf der Oberfläche) von Verformungen (z. B. Kratzer) zu unterscheiden. Bei entsprechender Wahl der Merkmale kann auch unterschieden werden, um welche Art von Verformungen es sich handelt bzw. welche Art von Verunreinigung vorliegt.

Das genannte Verfahren kann gemäß einer Ausführungsform so durchgeführt werden, dass nur für diejenigen Bildpunkte Merkmale berechnet werden, die mit einer Mindestintensität strahlungsbeaufschlagt wurden. So können beispielsweise, was in der Praxis meist ausreichend ist, nur für diejenigen Bildpunkte Merkmale berechnet werden, die die hellen Streifen des detektieren Streifenmusters bilden. Auf diese Weise kann der Rechenaufwand erheblich verringert werden.

In einer Ausführungsform ist ferner vorgesehen, dass als Merkmale der Abstand des jeweiligen Bildpunkts zu einem ausgewählten Punkt des Bildes, die detektierte Strahlungsintensität am Bildpunkt, die Lageabweichung des Bildpunkts zu einem Referenzpunkt innerhalb einer über das Bild gelegten Maske und/oder der Abstand zweier heller oder dunkler Streifen zueinander gewählt werden. Im ersten Fall kann der ausgewählte Punkt der Ursprung eines Koordinatensystems sein, dessen eine Achse, z. B. die x-Achse, senkrecht zu den Streifen verläuft, und bei dem die hierzu senkrechte y-Achse in Streifenrichtung verläuft. Im dritten Fall erfolgt die Auswertung des Bildes mit einer Maske, also einem vorgegebenen Bildbereich von beispielsweise 100 x 100 Pixeln, wobei der Referenzpunkt im Zentrum der Maske liegen kann.

Das Verfahren wird in einer weiteren Ausführungsform so durchgeführt, dass Merkmale verwendet werden, deren Werte sich nur durch Verunreinigungen auf der Objektoberfläche ändern, oder dass Merkmale verwendet werden, deren Werte sich nur durch Verformungen auf der Objektoberfläche ändern. Auf diese Weise kann abhängig von den gewählten Merkmalen beim Fehler zwischen einem zweidimensionalen (2D-) oder einem dreidimensionalen (3D-) Fehler unterschieden werden. Ein Fehler kann zum Beispiel dadurch als 3D-Fehler identifiziert werden, dass Merkmale ausgewählt werden, deren Wert sich nicht, oder nicht nennenswert, bei einem 3D-Fehler ändern, nicht aber bei einer Verunreinigung. Entsprechend kann ein Fehler als 2D-Fehler identifiziert werden, wenn Merkmale ausgewählt werden, deren Wert sich nicht, oder nicht nennenswert, bei einem 2D-Fehler ändern.

In einer Ausführungsform ist ferner vorgesehen, dass auf eine Verformung der Objektoberfläche geschlossen wird, bzw. auf eine Verformung als Fehler erkannt wird, wenn beim Überlappen der Bildregionen eines der zugehörigen Merkmale die Lageabweichung des Bildpunkts zu einem vorgegebenen Referenzpunkt innerhalb einer über das Bild gelegten Maske ist. Dieses Merkmal ändert sich im Sinne des letzten Absatzes nur dann in nennenswertem Maße bei Bildpunkten, wenn der Bildpunkt in einem Verformungsbereich (z. B. in einem Kratzer) liegt. Befindet sich der Bildpunkt hingegen in einem Verunreinigungsbereich, so erfährt dieses Merkmal nur minimale Änderungen.

Das obige Verfahren zum Erkennen von Fehlern auf der Oberfläche eines zylindrischen Objekt kann mit einer Beleuchtungsvorrichtung wie nachfolgend beschrieben durchgeführt werden.

Die für das Verfahren einsetzbare Beleuchtungsvorrichtung umfasst eine zylindrische Leuchte mit einer in ihrem Inneren angeordneten zylindrischen Schlitzblende. Die Leuchte umfasst eine zylindrische Lichtquelle, bspw. eine Halogenlampe, mit einem darin angeordneten zylindrischen Diffusor, und die Schlitzblende besteht aus einem mit axial verlaufenden Schlitzen ausgestatteten Zylinder. Im Zylinder sind die Schlitze derart angeordnet, dass senkrecht zur Zylinder- bzw. Schlitzblendenachse verlaufende Linien durch die Schlitze im Inneren der Schlitzblende in einem von der Zylinderachse beabstandeten Punkt zusammenlaufen.

Im Betrieb erzeugt die zylindrische Lichtquelle im Zusammenspiel mit dem in ihr angeordneten Diffusor eine diffuse Strahlung, mit der zunächst die Schlitzblende homogen ausgeleuchtet wird. Innerhalb der zylindrischen Schlitzblende befindet sich das zu prüfende Objekt. Dieses ist selbst zylindrisch ausgebildet und koaxial zur Lichtquelle angeordnet. Ein Teil der diffusen Strahlung gelangt durch die Schlitze der Schlitzblende und wird von dem zu prüfenden Objekt, beispielsweise einem metallischen und zum Beispiel auch glänzenden zylindrischen Objekt, reflektiert. Durch eine Strahlungseinkopplung, die nicht senkrecht zur Zylinderachse erfolgt, kann die reflektierte Strahlung in Form eines parallelen Strahlenbündels ausgekoppelt und von einem Detektor als ein aus hellen und dunklen Streifen bestehendes Streifenmuster detektiert werden.

Die aus der Beleuchtungsvorrichtung ausgekoppelte Strahlung ist ihrer Natur nach diffuse Strahlung. Würde eine perfekt gekrümmte Oberfläche mit dieser Strahlung beaufschlagt, so würde die reflektierte Strahlung auf einem Projektionsschirm ein Streifenmuster mit dunklen und hellen Streifen liefern. Hierbei hätten die hellen Streifen eine Soll-Helligkeit und eine Soll-Geometrie. Die hellen Streifen wären äquidistant zueinander. Es sei hierbei angemerkt, dass der Projektionsschirm nicht Bestandteil des Beleuchtungsvorrichtung sondern nur ein gedankliches Hilfsmittel ist, um die auf die Beschaffenheit der Strahlung zu charakterisieren.

Bei einer Auswertung solcher Streifenmuster von nicht-perfekten Oberflächen werden Abweichungen vom obigen idealen Streifenmuster festgestellt. Weist das Prüfobjekt eine Verunreinigung auf, so äußert sich dies in einer Änderung der lokalen Reflektivität und in einer Abweichung der Streifenhelligkeit von einer Soll-Helligkeit. Insofern lässt sich durch Auswertung der Streifenhelligkeit auf Verunreinigungen schließen. Besitzt das Prüfobjekt lokale Verformungen auf der Oberfläche, so haben diese eine gewisse Höhe bzw. Tiefe und bedingen lokal eine Änderung der Oberflächennormale gegenüber dem Fall einer planen Oberfläche. Je nach Ausprägung dieses Parameters ändert sich die Krümmung der hellen Streifen. Eine Auswertung der Streifengeometrie lässt somit Rückschlüsse auf Verformungen zu. Hierbei soll angemerkt werden, dass beide genannten Abweichungen gleichzeitig in einem einzigen Streifenmuster vorliegen können. Damit können mit der vorgeschlagenen Beleuchtungsvorrichtung beide Fehlertypen gleichzeitig optisch erfasst und in der Regel computergestützt identifiziert werden.

Die Beleuchtungsvorrichtung besitzt eine kompakte Bauform und benutzt wenig Komponenten, was einen niedrigen Herstellungspreis zur Folge hat. Die Vorrichtung kann mit Strahlung im sichtbaren Bereich arbeiten, sodass die Beleuchtungsvorrichtung eine Ergänzung zu bekannten zerstörungsfreien Prüfverfahren auf optischer Basis bilden kann.

Die Beleuchtungsvorrichtung kann ferner eine Leuchte haben, die mindestens drei ineinander angeordnete zylindrische Lichtquellen besitzt. Auf diese Weise kann auf einfache und preiswerte Weise eine lichtstarke Leuchte unter Wahl von Lichtquellen hoher Lichtausbeute bereitgestellt werden. Die Lichtquellen können Halogenlampen oder LED-Ringleuchten sein. Um eine akzeptable Prüfgeschwindigkeit für das zu untersuchende Objekt zu haben, sollte die Beleuchtungsstärke mindestens 230.000 lux, bevorzugt mindestens 250.000 lux sein.

Die Beleuchtungsvorrichtung kann ferner einen Diffusor aus mindestens drei ineinander angeordneten zylindrischen opaken Kunststoff- und/oder Glaskörpern haben. Durch diese Wahl lässt sich einfach und besonders preiswert diffuse Strahlung bereitstellen. Die Kunststoff- und/oder Glaskörper können entweder trübe ausgebildet sein oder an ihren Oberflächen aufgeraut sein, z.B. durch Sandstrahlen.

Weiterhin können bei der Beleuchtungsvorrichtung Leuchte und Schlitzblende koaxial zueinander angeordnet sein. Diese geometrisch angepasste Beleuchtung führt zu einer gleichmäßig ausgeleuchteten Oberfläche des Prüfobjekts, sofern dieses ebenfalls zylindrisch ausgebildet ist. Eine gleichmäßige diffuse Ausleuchtung führt bei reflektierenden bzw. glänzenden Prüfobjekten zu guten Messergebnissen, da bei gerichteter Strahlung je nach Lage des Prüfobjekts höchst unterschiedliche Grauwerte bei gleich beschaffenen Objektoberflächen auftreten können. Insofern ermöglicht diese geometrisch angepasste Beleuchtung die Untersuchung glänzender Oberflächen zylindrischer Prüfobjekte und beispielsweise metallischer Prüfobjekte.

Die Beleuchtungsvorrichtung kann zudem eine Schlitzblende mit einer Wandstärke von mindestens 3 mm aufweisen. Bei einer geringeren Wandstärke der Schlitzblende gelangt mehr Störlicht in den das Streifenmuster erfassenden Detektor, wobei eine höhere Wandstärke den Störlichtanteil nicht mehr nennenswert verringern kann.

Die Beleuchtungsvorrichtung kann weiterhin eine außerhalb der Leuchte angeordnete Störlichtblende besitzen. Diese verhindert eine Überstrahlung des beispielsweise von einer Zeilenkamera aufgenommenen Streifenmusters, sodass das Streifenmuster deutlicher sichtbar bzw. kontrastreicher ist.

Ein weiterer Aspekt der Erfindung bezieht sich auf ein Computerprogrammprodukt auf einem computerlesbaren Medium zur Durchführung des oben genannten Verfahrens zum Erkennen von Fehlern auf der Oberfläche eines zylindrischen Objekts. Das computerlesbare Medium, beispielsweise eine CD oder eine DVD, umfasst computerlesbare Programmmittel, mit denen ein Computer veranlasst wird, ein aus hellen und dunklen Streifen bestehendes Bild, das beispielsweise mit Hilfe der obigen Beleuchtungsvorrichtung gewonnen und insofern von einem zylindrischen Prüfobjekt reflektiert wurde, auszuwerten. Die Programmmittel veranlassen den Computer im Einzelnen dazu, für jeden Bildpunkt des Bildes oder eines Teils der Punkte des Bildes, das aus einem Muster aus einander benachbarten hellen und dunklen Streifen besteht, eine Mehrzahl von Merkmalen zu berechnen. Der Computer identifiziert dann Bildpunkte, bei denen der Wert mindestens eines Merkmals oberhalb und/oder unterhalb mindestens eines vorgegebenen Schwellwerts liegt, und identifiziert Bildregionen, in denen die identifizierten Bildpunkte eine vorgegebene Dichte überschreiten. Eine derartige Bildregion stellt einen Bildausschnitt dar, wo möglicherweise ein Fehler vorliegt. Der Fehler wird dadurch identifiziert, bzw. die Bildregion wird dadurch als Fehlerregion identifiziert, dass die zu zwei verschiedenen Merkmalen gehörenden Bildregionen hinreichend dicht benachbart sind.

In einer weiteren Ausführungsform ist das Computerprogramm ausgebildet, nur für diejenigen Bildpunkte Merkmale zu berechnen, die mit einer Mindestintensität strahlungsbeaufschlagt wurden. So können beispielsweise nur für die zu den hellen Streifen des Streifenmusters gehörenden Bildpunkte Merkmale berechnet werden, wodurch der Rechenaufwand sinkt.

Ferner kann in einer Ausführungsform das Computerprogramm so ausgebildet sein, dass abhängig von den Merkmalen der Fehler als eine Verunreinigung oder als eine Verformung des Objekts identifiziert wird.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Figur 1a, 1b: eine Leuchte zur Bereitstellung einer diffusen Beleuchtung,
- Figur 2: eine Schlitzblende,
- Figur 3: eine Beleuchtungsvorrichtung in der Draufsicht.
- Figur 4a, 4b: eine Beleuchtungsvorrichtung in der Seitenansicht,
- Figur 5a-5d: fotografierte Streifenmuster einer Metalloberfläche,
- Figur 6: ein Flussdiagramm zum Ablauf des Verfahrens zum Erkennen von Fehlern auf der Oberfläche eines zylindrischen Objekts,
- Figur 7: fotografierte Streifenmuster.

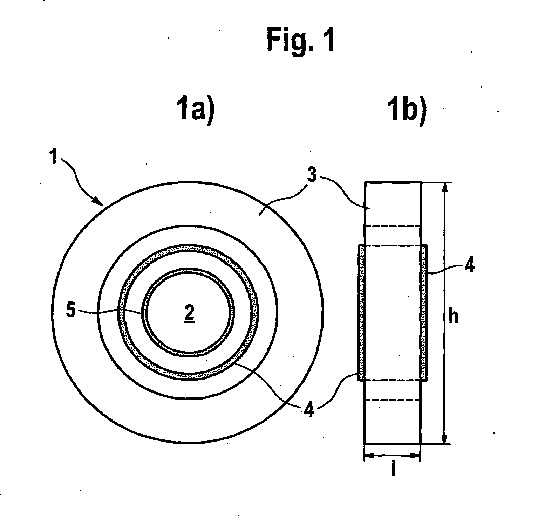

Bei den Figuren, bei denen gleiche Bezugszeichen für gleiche Gegenstände stehen, zeigen die Figuren 1 a und 1 b eine Ausführungsform einer zylinderischen und nahezu ringförmigen Leuchte 1, und zwar in Figur 1a) mit Blick in Richtung der Zylinderachse und bei Figur 1 b senkrecht zur Zylinderachse. Die Abmessungen der Leuchte können in hohem Maße frei gewählt werden und orientieren sich am Radius des zylindrischen Prüfobjekts, welches im Kernbereich 2 platziert wird. Im vorliegenden Beispiel ist der äußere Durchmesser der Lichtquelle 3 zu h = 200 mm gewählt.

Die Lichtquelle 3 besteht aus insgesamt sechs einzelnen Lichtquellen (nicht gezeigt). Sie wurden unter dem Gesichtspunkt hoher Lebensdauer, hoher Lichtausbeute, Kompaktheit und hoher Streuungsfähigkeit ausgewählt. Es handelt sich bei den Lichtquellen jeweils um eine Halogenlampe der Firma Philips mit der Artikelnummer DDL/01. Sie wird mit 20 V betrieben, hat eine Leistung von 150 W und die Lampenfassung GX 5,3. Koaxial zur Lichtquelle 3 ist ein zylindrischer Diffusor 4 angeordnet. Er besteht aus mehreren, z.B. 8, ineinander positionierten opaken Glaskörpern (nicht gezeigt). Alternativ können halbdurchlässige Kunststoffkörper eingesetzt werden. Die Wandstärke des Diffusors, vorliegend 23 mm, und die Anzahl der Glaskörper sind der Lichtstärke und der Trübheit des Glases angepasst.

Im Inneren des Diffusors 4 befindet sich das zylindrische Prüfobjekt 5. Lichtquelle 3 und Diffusor 4 haben die gleiche Geometrie wie das Prüfobjekt 5, sind also der zylindrischen Geometrie des Prüfobjekts 5 angepasst. Der Diffusor 4 dient dazu, die Strahlung der Lichtquelle 3 gleichförmig auf der Oberfläche des Prüfobjekts 5 zu verteilen.

Die diffuse Strahlung der Leuchte 1 dient der Erfassung von Verunreinigungen auf der Oberfläche des Prüfobjekts 5. Die diffuse Strahlung wird von dessen Oberfläche reflektiert und kann mit großflächigen LED-Arrays oder einer Zeilenkamera detektiert werden. Alternativ kann mit indirekter Beleuchtung über Schirme gearbeitet werden.

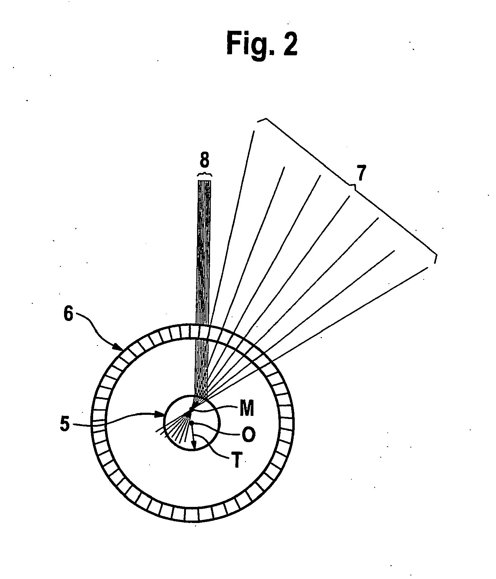

Figur 2 zeigt eine Ausführungsform einer Schlitzblende 6. Die zylindrische Schlitzblende 6, die in Zylinderlängsrichtung mit Schlitzen versehen ist, besteht aus Aluminium oder Zirconium, und wird bei ihrem Einsatz diffus beleuchtet (nicht gezeigt). Die durch die Schlitze einfallenden Lichtstrahlen 7 der diffusen Beleuchtung sind bedingt durch die Schlitzgeometrie so ausgerichtet, dass sie bei Abwesenheit eines Prüfobjekts 5 im Inneren der Schlitzblende 6 in einem Punkt M zusammenlaufen. Die Lage des Punkts M ist an den Durchmesser r des Prüfobjekts 5 angepasst.

Das Prüfobjekt 5 besitzt eine durch den Punkt O verlaufende Achse senkrecht zur Figurenebene. Ist ein Prüfobjekt 5 koaxial eingebracht, so ist der Abstand des Punkts O zum Punkt M kleiner als der Radius r. Die einfallenden Strahlen 7 werden an der Oberfläche des Prüfobjekts 5 reflektiert. Da sie schräg zur durch den Punkt O verlaufenden Achse eingekoppelt werden, und damit schräg zur Figurenebene, lassen sich ausfallende Strahlen 8 am hinteren Ende der Schlitzblende 6 als paralleles Strahlenbündel auskoppeln.

Während einer Messung wird das Prüfobjekt 5 axial mit einer Prüfgeschwindigkeit von ca. (50 +/- 5) cm/s bewegt und die reflektierten Strahlen 7 mit einer Taktrate von 5000/sec, d.h. 5000 Zeilen (des Detektors) pro Sekunde erfasst. Diese Prüfgeschwindigkeit war nur mit der hohen Beleuchtungsstärke möglich, die zu 270.000 lux gemessen wurde.

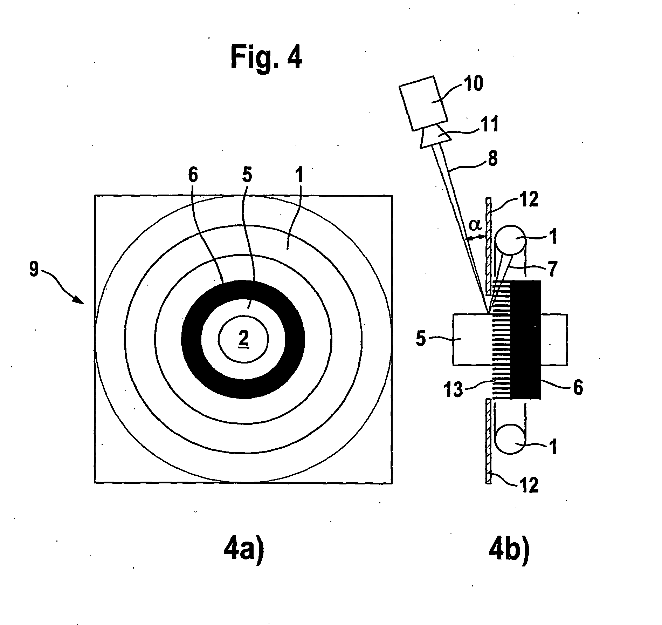

Figur 4 zeigt eine Beleuchtungsvorrichtung 9. Die zylindrische Leuchte 1, nämlich diejenige der Ausführungsform gemäß Figur 1, beleuchtet die Schlitzblende 6. Bei dieser handelt es sich um eine Schlitzblende gemäß der Figur 2. Leuchte 1 und Schlitzblende 6 sind beide zylindrisch und koaxial zueinander angeordnet. Figur 4a zeigt diese Anordnung mit Blick in die Zylinderlängsrichtung.

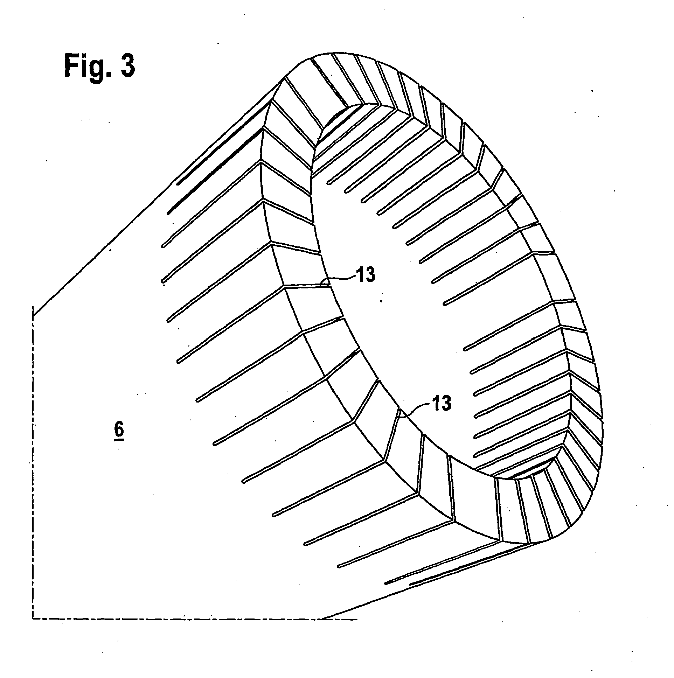

Figur 4a zeigt eine Beleuchtungsvorrichtung 9. Die zylindrische Leuchte 1, nämlich diejenige gemäß Figur 1, beleuchtet die Schlitzblende 6. Bei dieser handelt es sich um eine Schlitzblende gemäß der Figur 2. Leuchte 1 und Schlitzblende 6 sind beide zylindrisch und koaxial zueinander angeordnet. Figur 3a zeigt diese Anordnung mit Blick in die Zylinderlängsrichtung.

In Figur 4b ist die Beleuchtungsvorrichtung 9 in einer Seitenansicht dargestellt, wobei die Zylinderachse horizontal verläuft. Die Leuchte 1 beleuchtet die Schlitzblende 6 mit einfallenden Strahlen unter einem Winkel α gegenüber der Oberflächennormalen des Prüfobjekts 5, sodass die ausfallenden Strahlen 8 am hinteren Ende der Schlitzblende 6 ausgekoppelt werden können. Sie werden von einer Zeilenkamera 10 mit vorgeschalteter Blende 11 detektiert. Um den Bildkontrast zu verbessern, ist der Schlitzblende 6 austrittsseitig eine Störlichtblende 12 zugeordnet. Die Anordnung der Schlitze 13, d. h. ihre Länge und Position, ist dem Außendurchmesser des Prüfobjekts angepasst. Die Länge der Schlitze in Längsrichtung bestimmt die Helligkeit der hellen Streifen. Werden kürzere Schlitze gewählt, so sinkt der Helligkeitskontrast zwischen hellen und dunklen Streifen. Die Position bzw. die Orientierung der Schlitze senkrecht zur Zylinderachse und die Breite der Schlitze ist an der Geometrie des gesuchten Streifenbündels angepasst, sodass alle ausfallenden Lichtstrahlen parallel in Richtung Zeilenkamera 10 verlaufen. Im Kamerabild entsteht ein periodisches Streifenmuster, bestehend aus hellen und dunklen Streifen. Eine geeignet ausgewählte Wandstärke, z. B. 3 mm in der vorliegenden Ausführungsform, sorgt dafür, dass kein Störlicht im Kamerabild projiziert wird.

Die strukturierte Beleuchtung arbeitet mit einem einfachen, nicht kodierten Muster. Die Schlitze 13 bedingen Streifen einer bekannten Periode, die entlang der Zylinderachse projiziert werden. Mit dieser Beleuchtung lassen sich dreidimensionale Strukturen bzw. Änderungen in der zylindrischen Form des Prüfobjekts 5 einfach erfassen.

Die beiden wesentlichen Fehlerarten Verformungen und Verunreinigungen lassen sich mit der Beleuchtungsvorrichtung 9 auf einmal erfassen, da sie beide zu einer Störung des idealen Streifenmusters führen. Wie nachfolgend noch näher erläutert wird, liegt bei Oberflächenfehlern die Information in der Helligkeit, und werden bei Formfehlern Formänderungen an der Krümmung der hellen Streifen erkannt.

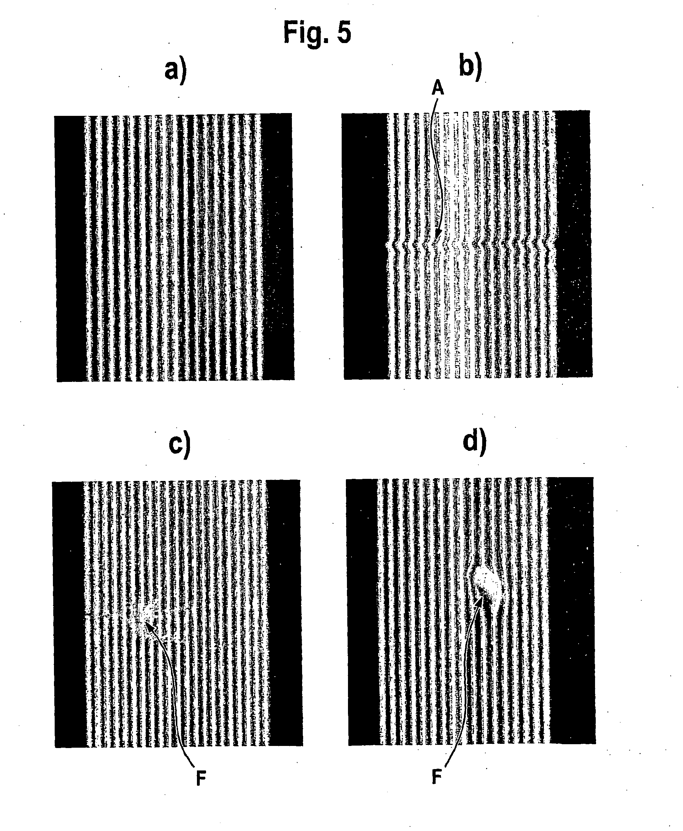

Figur 5 zeigt Streifenmuster, wie sie von der Zeilenkamera 10 erfasst und beispielsweise auf einen Computerbildschirm zur Anzeige gebracht werden können. Figur 5a zeigt hierbei den Fall einer qualitativ guten Oberfläche der Metalloberfläche, d. h. einer Oberfläche ohne Fehler. Die Abfolge senkrecht verlaufender heller und dunkler Streifen ist weitgehend äquidistant. Die eingesetzte Zeilenkamera 10 musste für diese Aufnahme nicht kalibriert werden. In diesem wie in allen anderen Fällen konnten fehlerfreie Oberflächenbereiche zuverlässig von Fehlerbereichen unterschieden werden.

Figur 5b zeigt dieselbe Oberfläche wie Figur 5a, weist jedoch in der Bildmitte Artefakte A wegen falscher Objekthandhabung während der Messung auf. Durch eine Modifikation der Objekthandhabung, z. B. der Bewegung oder Ausrichtung des Prüfobjekts 5 innerhalb der Beleuchtungsvorrichtung 1, konnten mit einer bekannten guten Oberfläche Artefakte entweder in ihrer Stärke gemindert oder ausgeschlossen werden. Bei zu prüfenden unbekannten Oberflächen konnten damit Fehler von Artefakten unterschieden werden.

Figur 5c zeigt ein Oberflächenbild mit einem zweidimensionalen Fehler F, z. B. einer (flächigen) Farbverunreinigung, wohingegen bei Figur 5d das Prüfobjekt einen dreidimensionalen Fehler F hat, nämlich einen Krater.

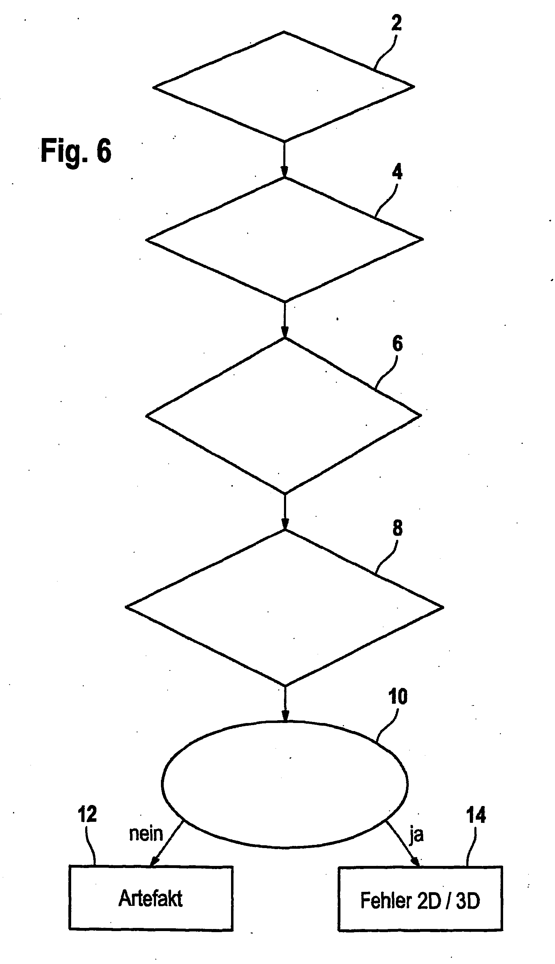

Figur 6 zeigt ein Flussdiagramm zum Ablauf des Verfahrens zum Erkennen von Fehlern auf der Oberfläche eines zylindrischen Objekts. Das Verfahren beginnt in Schritt 2 mit der Aufnahme eines Bildes der Objektoberfläche. Dieser Schritt 2 umfasst zum einen die Beaufschlagung des zylindrischen Objekts mit Strahlung, die auf einem Projektionsschirm ein Muster aus einander benachbarten hellen und dunklen Streifen zu erzeugen vermag und zum anderen ein ortsaufgelöstes Detektieren der von der Objektoberfläche reflektierten Strahlung nebst Erfassen der Messwerte als Bild. Die ortsaufgelöste Detektion kann mit einem Zeilen- oder einem Flächendetektor erfolgen, der die Oberfläche des Prüfobjekts pixelweise abtastet. Das Ergebnis ist ein digitales Bild, beispielsweise eines gemäß der Figuren 5a-d, das computergestützt ausgewertet werden kann.

Im Schritt 4 werden zu allen Pixeln oder zu einer Teilmenge der Pixel, Merkmale a, b, c... berechnet. Die hierzu verwendete Teilmenge kann aus denjenigen Pixeln bestehen, die die weißen Streifen bilden, wobei in diesem Fall die hellen Streifen über die Pixelintensitäten identifiziert werden. Zusätzlich können zu den Pixeln, die die schwarzen Streifen bilden, Merkmale berechnet werden, wobei die dabei verwendeten Merkmale von den eingangs erwähnten Merkmalen a, b, c ... verschieden sein können. Die Merkmale können der Abstand des Pixels zu einem ausgewählten Punkt des Bildes, die am Pixelort detektierte Strahlungsintensität und/oder die Lageabweichung des Pixels zu einem vorgegebenen Referenzpunkt innerhalb einer über das Bild gelegten Maske sein.

Im Schritt 6 werden die Bildpunkte bzw. Pixel bestimmt, deren Merkmalswerte größer oder kleiner einem Schwellwert sind. Dies wird im Regelfall für jedes Merkmal durchgeführt, wobei es für jedes Merkmal einen merkmalsspezifischen Schwellwert gibt. Auf diese Weise werden so viele Pixelmengen A, B, C ...definiert wie es Merkmale a, b, c .. gibt.

Im nächsten Schritt 8 werden Bildregionen bestimmt, wo im Bild die Dichte der im Schritt 6 bestimmten Pixelmengen A, B, C .. erhöht ist. Es wird also danach gesucht, wo die Bildpunkte mit Merkmalen größer oder kleiner einem Schwellwert im Bild anzutreffen sind. Diese Bildregionen stellen mögliche Fehlerbereiche dar.

Im Schritt 10 wird überprüft, ob die im Schritt 8 bestimmten Bildregionen zu verschiedenen Merkmalen a, b, c .. hinreichend dicht benachbart sind. Ist dies nicht der Fall, wird im Schritt 12 auf einen Artefakt erkannt. Ist dies der Fall, so gehören die hinreichend dicht benachbarten Bildregionen zu einem Fehler. Die Fehlerregion kann dann beispielsweise als derjenige Bildbereich, z.B. approximiert als Rechteck, definiert werden, der die beiden dicht benachbarten Bildregionen umfasst. Hierbei kann merkmalsabhängig noch unterschieden werden, ob der Fehler eine Verunreinigung (2D) oder eine Verformung (3D) ist.

Wird ein Merkmal gewählt, dessen Wertveränderung auf eine lokale Krümmung der weißen Streifen schließen lässt, bspw. der Abstand des Bildpunkts zu einem ausgewählten Punkt des Bildes, so deutet die zugehörige Bildregion im Überlappungsfall auf einen 3D-Fehler bzw. eine Verformung hin.

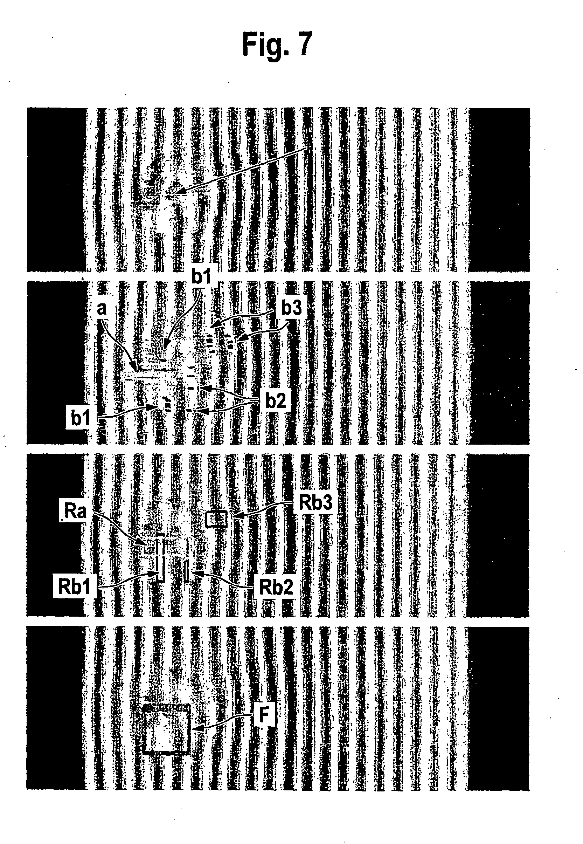

Figur 7 zeigt die Identifikation einer Fehlerregion mit dem vorliegenden Verfahren anhand von vier Fotos. Das oberste Foto von Figur 7 zeigt die aufgenommene Objektoberfläche gemäß Schritt 2 von Figur 6. Der menschliche Betrachter würde in der mit dem Pfeil markierten Region einen Fehler vermuten.

Dieselbe Objektoberfläche wird anhand zweier Merkmale computergestützt auf einen Fehler hin untersucht. Diese Merkmale sind
a) der horizontale Abstand der beiden benachbarten dunklen Streifen, wobei ein dunkler Streifen dort als gegeben definiert wird, wo die Pixelintensität einen vorgegebenen Schwellwert unterschreitet
b) für die Pixel eines weißen Streifens die Horizontalverschiebung der hellen Streifen.

Es gibt Pixel, für die das Merkmal a) einen vorgegebenen Schwellwert überschreitet. Der Pfeil, der mit "a" beschriftet ist, zeigt auf diese Pixel. Korrespondierend hierzu gibt es auch Pixel, für die das Merkmal b) einen vorgegebenen Schwellwert überschreitet. Die Pfeile, die mit "b1", "b2" und "b3" beschriftet sind, zeigen auf diese Pixel. Das zweite Foto von oben visualisiert somit das Ergebnis von Schritt 6 der Figur 6.

Anschließend wurden gemäß Schritt 8 von Figur 6 Bildregionen bestimmt, wo die Merkmale a) bzw. b) gehäuft ihren jeweiligen Schwellwert überschreiten. Dies ist die Bildregion Ra, wo gehäuft der Schwellwert des Merkmals a) überschritten wird, sowie die Bildregionen Rb1, Rb2 und Rb3, wo gehäuft der Schwellwert des Merkmals b) überschritten wird.

Anschließend wurde im Sinne von Schritt 10 von Figur 6 geprüft, ob die Bildregionen zu den zwei verschiedenen Merkmalen a) und b) hinreichend dicht benachbart waren. Bezogen auf die Bildregion Ra waren die Bildregionen Rb1 und Rb2 hinreichend dicht benachbart, nicht aber die Bildregion Rb3. Das Kriterium der dichten Nachbarschaft wurde anhand des Abstands der Mittelpunkte der Bild-regionen zueinander geprüft, welcher einen vorgegebenen Wert nicht überschreiten durfte. Die Fehlerregion wurde dadurch bestimmt, dass einerseits ein die Bildregionen Ra und Rb1 umschließendes Rechteck definiert wurde, andererseits ein die Bildregionen Ra und Rb2 umschließendes Rechteck. Auf beide Rechtecke, die nur einen geringen vertikalen Versatz haben, zeigt der Pfeil im untersten Foto der Figur 7.

### Bezugszeichenliste

- 01: Leuchte
- 02: Kembereich
- 03: Lichtquelle
- 04: Diffusor
- 05: Prüfobjekt
- 06: Schlitzblende
- 07: einfallende Strahlen
- 08: ausfallende Strahlen
- 09: Beleuchtungsvorrichtung
- 10: Zeilenkamera
- 11: Blende
- 12: Störlichtblende
- 13: Schlitz

- A: Artefakt
- F: Fehler
- a: Pixel, bei denen ein Merkmal "a" einen Schwellwert überschreitet
- b1: Pixel, bei denen ein Merkmal "b1" einen Schwellwert überschreitet
- b2: Pixel, bei denen ein Merkmal "b2" einen Schwellwert überschreitet
- b3: Pixel, bei denen ein Merkmal "b3" einen Schwellwert überschreitet-
- Rb1: Bildregion
- Rb2: Bildregion
- Rb3: Bildregion

## Patentansprüche

1. Verfahren zum Erkennen von Fehlern auf der Oberfläche eines zylindrischen Objekts (5), umfassend die folgenden Schritte:
a) Beaufschlagen des Objekts mit Strahlung, die auf einem Projektionsschirm ein Muster aus einander benachbarten hellen und dunklen Streifen zu erzeugen vermag,
b) ortsaufgelöstes Detektieren der von der Objektoberfläche reflektierten Strahlung und Erfassen der Messwerte als Bild,
c) Berechnen, für jeden Bildpunkt des Bildes oder einen Teil der Bildpunkte, einer Mehrzahl von Merkmalen,
d) Identifizieren von Bildpunkten, bei denen der Wert eines Merkmals oberhalb oder unterhalb eines vorgegebenen Schwellwerts liegt,
e) Identifizieren von Bildregionen (Ra, Rb1, Rb2, Rb3), in denen die identifizierten Bildpunkte eine vorgegebene Dichte überschreiten,
f) Identifizieren eines Fehlers dadurch, dass zu mindestens zwei verschiedenen Merkmalen gehörende Bildregionen hinreichend dicht benachbart sind.

2. Verfahren nach Anspruch 2, bei dem nur für diejenigen Bildpunkte Merkmale berechnet werden, die mit einer Mindestintensität strahlungsbeaufschlagt wurden.

3. Verfahren nach Anspruch 1 oder 2, bei dem als Merkmale
a) der Abstand des Bildpunkts zu einem ausgewählten Punkt des Bildes,
b) und/oder die detektierte Strahlungsintensität am Bildpunkt,
c) und/oder die Lageabweichung des Bildpunkts zu einem vorgegebenen Referenzpunkt innerhalb einer über das Bild gelegten Maske
d) und/oder der Abstand zweier heller oder dunkler Streifen gewählt werden.

4. Verfahren nach einem der vorherigen Ansprüche, bei dem abhängig von den gewählten Merkmalen der Fehler als eine Verunreinigung oder als eine Verformung des Objekts identifiziert wird.

5. Verfahren nach Anspruch 4, bei dem auf eine Verformung der Objektoberfläche geschlossen wird, wenn bei den hinreichend dicht benachbarten Bildregionen eines der zugehörigen Merkmale die Lageabweichung des Bildpunkts zu einem vorgegebenen Referenzpunkt innerhalb einer über das Bild gelegten Maske ist.

6. Computerprogrammprodukt auf einem computerlesbaren Medium, umfassend computerlesbare Programmmittel, mit denen ein Computer veranlasst wird, die folgenden Schritte durchzuführen:
a) Berechnen, für jeden Bildpunkt eines Bildes oder einen Teil der Bildpunkte eines Bildes, das aus einem Muster aus einander benachbarten hellen und dunklen Streifen besteht, einer Mehrzahl von Merkmalen,
b) Identifikation von Bildpunkten, bei denen der Wert eines Merkmals oberhalb oder unterhalb eines vorgegebenen Schwellwerts liegt,
c) Identifikation von Bildregionen, in denen die identifizierten Bildpunkte eine vorgegebene Dichte überschreiten,
d) Identifikation eines Fehlers dadurch, dass zu mindestens zwei verschiedenen Merkmalen gehörende Bildregionen hinreichend dicht benachbart sind.

7. Computerprogrammprodukt nach Anspruch 6, bei dem nur für diejenigen Bildpunkte Merkmale berechnet werden, die mit einer Mindestintensität strahlungsbeaufschlagt wurden.

8. Computerprogrammprodukt nach Anspruch 6 oder 7, bei dem abhängig von den Merkmalen der Fehler als eine Verunreinigung oder als eine Verformung des Objekts identifiziert wird.

## Claims

1. A method for detecting defects on the surface of a cylindrical object (5), wherein said method comprises the following steps:
a) subjecting the object to radiation that is able to produce a pattern of mutually adjacent bright and dark strips on a projection screen,
b) detecting the radiation reflected by the surface of the object in a spatially resolved fashion and acquiring measured values in the form of an image,
c) calculating a multitude of characteristics for each pixel of the image or a portion of the pixels,
d) identifying pixels, at which the value of a characteristic lies above or below a predetermined threshold value,
e) identifying image areas (Ra, Rb1, Rb2, Rb3) in which identified pixels exceed a predetermined density,
f) identifying a defect by areas of the image belonging to at least two different characteristics being adjoining sufficiently close.

2. The method according to claim 2, wherein characteristics are only calculated for pixels that were subjected to radiation with a minimum intensity.

3. The method according to claim 1 or 2, wherein:
a) at least one of the distance of the pixel from a selected point of the image,
b) the radiation intensity detected at the pixel,
c) the deviation of position between the pixel and a predetermined reference point within a mask placed over the image, and
d) the distance between two bright or dark strips
is chosen as characteristic.

4. The method according to one of the preceding claims, wherein the defect is identified as at least one of a contamination and as a deformation of the object in dependence on the selected characteristics.

5. The method according to claim 4, wherein it is deduced that the surface of the object contains a deformation if one of the corresponding characteristics in the areas of the image that adjoin sufficiently close is the deviation of position between the pixel and a predetermined reference point within a mask placed over the image.

6. A computer program product on a computer-readable medium, comprising computer-readable program means that lead a computer to carry out the following steps:
a) calculating a multitude of characteristics for each pixel of an image or a portion of the pixels of an image consisting of a pattern of mutually adjacent bright and dark strips,
b) identifying pixels, at which the value of one characteristic lies above or below a predetermined threshold value,
c) identifying image areas, in which the identified pixels exceed a predetermined density,
d) identifying a defect by areas of the image belonging to at least two different characteristics being adjoining sufficiently close.

7. The computer program product according to claim 6, wherein characteristics are only calculated for the pixels that were subjected to radiation with a minimum intensity.

8. The computer program product according to claim 6 or 7, wherein the defect is identified as at least one of a contamination and a deformation of the object in dependence on the characteristics.

## Revendications

1. Procédé pour identifier des erreurs sur la surface d'un objet cylindrique (5), comportant les étapes suivantes consistant à:
a) soumettre l'objet à un rayonnement qui peut générer sur un écran de projection un modèle composé de bandes claires et sombres adjacentes l'une à l'autre,
b) détecter de manière à résolution locale le rayonnement réfléchi par la surface de l'objet et saisir les valeurs de mesure comme image,
c) calculer, pour chaque pixel de l'image ou une partie des pixels, une pluralité de caractéristiques,
d) identifier les pixels pour lesquels la valeur d'une caractéristique se situe au-dessus ou au-dessous d'une valeur de seuil prédéterminée,
e) identifier les régions d'image (Ra, Rb1, Rb2, Rb3) dans lesquelles les pixels identifiés excèdent une densité prédéterminée,
f) identifier une erreur en ce qu'au moins deux régions d'image appartenant à des caractéristiques différentes sont suffisamment adjacentes.

2. Procédé selon la revendication 2, dans lequel les caractéristiques ne sont calculées que pour les pixels qui ont été soumis à rayonnement avec une intensité minimale.

3. Procédé selon la revendication 1 ou 2, dans lequel sont choisis comme caractéristiques
a) la distance du pixel par rapport à un point sélectionné de l'image,
b) et/ ou l'intensité de rayonnement détectée au pixel,
c) et/ou l'écart de situation du pixel par rapport à un point de référence prédéterminé dans un masque placé sur l'image
d) et/ou la distance entre deux bandes claires ou sombres.

4. Procédé selon l'une des revendications précédentes, dans lequel l'erreur est identifiée, dépendant des caractéristiques choisies, comme une impureté ou une déformation de l'objet.

5. Procédé selon la revendication 4, dans lequel il est conclu d'une déformation de la surface de l'objet lorsque, pour les régions d'image suffisamment rapprochées l'une de l'autre, l'une des caractéristiques associées est l'écart de situation du pixel par rapport à un point de référence prédéterminé dans un masque placé sur l'image.

6. Programme d'ordinateur sur un support lisible par ordinateur, comportant des moyens de programme lisibles par ordinateur par lesquels un ordinateur est amené à réaliser les étapes suivantes consistant à:
a) calculer, pour chaque pixel d'une image ou une partie des pixels d'une image consistant en un motif composé de bandes claires et sombres adjacentes l'une à l'autre, une pluralité de caractéristiques,
b) identification de pixels pour lesquels la valeur d'une caractéristique se situe au-dessus ou au-dessous d'une valeur de seuil prédéterminée,
c) identification de régions d'image dans lesquelles les pixels identifiés excèdent une densité prédéterminée,
d) identification d'une erreur en ce qu'au moins deux régions d'image appartenant à des caractéristiques différentes sont suffisamment rapprochées l'une de l'autre.

7. Programme d'ordinateur selon la revendication 6, dans lequel il n'est calculé des caractéristiques que pour les pixels qui ont été soumis à rayonnement avec une intensité minimale.

8. Programme d'ordinateur selon la revendication 6 ou 7, dans lequel l'erreur est identifiée, dépendant des caractéristiques, comme une impureté ou comme déformation de l'objet.
